# EUROPEAN PATENT SPECIFICATION

(11) **EP 3 048 315 B1**
(45) Date of publication and mention of the grant of the patent: **04.03.2020**
(21) Application number: 14853576.8
(22) Date of filing: 06.10.2014
(51) Int. Cl.: F16C 11/06

(54) **BALL SEAT AND BALL JOINT**
KUGELSITZ UND KUGELGELENK
SIÈGE DE ROTULE ET JOINT À ROTULE

(30) Priority: 17.10.2013 JP 2013216048
(43) Date of publication of application: 27.07.2016
(73) Proprietor: KABUSHIKI KAISHA SOMIC ISHIKAWA, Sumida-ku, Tokyo 130-0004 (JP)
(72) Inventor: ICHIKAWA Hisashi, Hamamatsu-shi Shizuoka 435-8560 (JP); ITO Hiroaki, Hamamatsu-shi Shizuoka 435-8560 (JP)
(74) Representative: Sommer, Andrea
(86) International application number: PCT/JP2014/076686
(87) International publication number: WO 2015/056592

(56) References cited:
- WO-A1-2005/003575
- CH-A- 355 329
- FR-A- 1 181 202
- JP-A- H0 337 409
- JP-A- H08 326 739
- JP-A- 2001 263 332
- JP-A- 2009 144 749
- JP-A- 2012 077 841
- JP-A- 2012 077 841
- JP-U- S6 184 221
- JP-U- S6 439 923
- US-A- 3 959 872
- US-A- 4 904 106

## Description

### TECHNICAL FIELD

The present invention relates to a ball seat for slidably holding a spherical ball part formed at a tip of a shaft-shaped stud and a ball joint including the ball seat.

### BACKGROUND ART

In a suspension mechanism (suspension device) and a steering mechanism (steering device) of a vehicle such as an automobile, a ball joint has been used for connecting shaft-shaped components so that these components can freely move. Normally, in a ball joint, a substantially spherical ball part formed at a tip of a shaft-shaped stud is housed in a tubular socket with base via a ball seat (also referred to as "bearing seat") for slidably holding the ball part.

In such a ball joint, a groove for keeping lubricant for smoothly sliding a ball part of a ball stud is formed in an inner periphery of a ball seat. For example, in a ball joint disclosed in PATENT LITERATURE 1 below, grooves with square cross-sectional shape are formed at four locations of a side ball seat in the circumferential direction on an inner periphery of a tubular ball seat so that each of the grooves extends along the axis direction of a bearing seat.

### CITATION LIST

### PATENT LITERATURE

PATENT LITERATURE 1: JP-A-2003-262213 PATENT LITERATURE 2: CH 355 329 A

### SUMMARY OF THE INVENTION

However, in a ball seat disclosed in PATENT LITERATURE 1 above, the side cross-sectional shape of a groove is square. Therefore, when the ball seat is pressed into a socket and a side of the ball seat is deformed to the ball part side, a load concentrates at a corner of the groove to sometimes cause overload and a damage due to stress concentration. Accordingly, there has been a problem with a ball seat known to the inventors that a process of assembling a ball joint is cumbersome and complicated and that efficient assembly is not possible due to low yield.

The present invention has been developed to deal with the problem described above. One purpose of the present invention is to provide a ball seat that can be efficiently assembled with high yield and a ball joint including the ball seat.

A feature of the present invention to accomplish the purpose described above is a ball seat including a tubular holder housed in a socket while the tubular holder is pushed to a ball part side by an inner surface of the socket to be deformed, the tubular holder slidably housing the ball part formed at a tip of a ball stud extending in a stick shape. The holder has a concavely extending first groove at least in the inner surface of the deformed part, and the first groove is formed in a shape so that the curvature of the inner surface of the cross-section of the first groove is a finite value for the whole length. In this case, the side cross-sectional shape of the first groove is the cross-sectional shape on a plane vertical to the extending direction of the first groove. The side cross-sectional shape of the first groove may or may not include a boundary where the first groove opens on the inner periphery of the holder.

According to a feature of the present invention in the ball seat, the side cross-sectional shape of the first groove formed in the holder slidably holding the ball part of the ball stud is formed in a shape with the curvature of the inner surface being a finite value for the whole first groove. Accordingly, in the ball seat, the side cross-sectional shape of the first groove does not include a part with infinite curvature, for example, a corner with a right angle, an acute angle, or an obtuse angle (including other sharp shapes). Therefore, it is possible to prevent concentration of a load at a certain location such as a corner or sharp shapes when the holder is deformed in the socket, and it is possible to prevent overload and a damage due to stress concentration. As a result, the ball seat can simplify the process of assembling the ball joint and realizes efficient assembly with improved yield.

In addition, the other feature of the present invention is that, in the ball seat, the first groove is formed in a shape so that the first derivation value of the distance between the central axis of the tubular holder and the inner surface of the first groove consecutively changes.

According to the other feature of the present invention in the ball seat, the first groove is formed in a shape so that the first derivation value of the distance between the central axis of the holder and the inner surface of the first groove consecutively changes. Therefore, overload and a damage due to stress concentration can be prevented in the first groove with a shape of the side cross-sectional shape being a finite value except a shape in which the first derivation value of the distance between the central axis of the holder and the inner surface of the first groove becomes discontinuous. In this case, the shape with the first derivation value of the distance between the central axis of the holder and the inner surface of the first groove being discontinuous includes a so-called undercut shape (also referred to as "dovetail groove") in which the groove width inside the first groove is wider than the opening width on the inner surface of the holder of the first groove, for example. Furthermore, the shape with the discontinuous first derivation value includes a shape with a part perpendicular to the inner surface of the holder in the depth direction in a part of the inner surface of the first groove, in other words, a shape with a part parallel to the virtual straight line extending from the central axis of the holder in a part of the inner surface of the first groove.

In addition, the other feature of the present invention is that, in the ball seat, the first groove is formed in the depth from not less than 40% to not more than 50% of the thickness of the holder.

According to the other feature of the present invention in the ball seat, the first groove is formed in the depth from not less than 40% to less than 50% of the thickness of the holder. Therefore, it is possible to form the first groove while the strength of the holder is secured. With respect to the depth of the first groove of the ball seat, the range from not less than 40% to less than 50% mentioned above is a preferable range, and a case in which the depth of the first groove is the depth out of this range is not excluded.

In addition, the other feature of the present invention is that, in the ball seat, the opening width of the first groove on the inner surface of the holder is larger than the thickness of the holder.

According to the other feature of the present invention with this structure, in the ball seat, the opening width of the first groove on the inner periphery of the holder is wider than the thickness of the holder. Therefore, the depth of the first groove can be shallow while maintaining the amount of lubricant kept at the first groove, which leads to good lubrication. Moreover, the curvature of the inner surface shape of the first groove can be large. Therefore, overload and a damage due to stress concentration can be more effectively prevented. Of course, the opening width of the first groove on the inner periphery of the holder may be smaller (narrower) than the thickness of the holder.

In addition, the other feature of the present invention is that, in the ball seat, the holder has a concavely extending second groove in the inner surface of a part subject to a load of the ball stud in the axis direction from the ball part, and the second groove is formed so that the second groove has a corner at least at the base of the cross-section.

According to other feature of the present invention with this structure, the ball seat has the concavely extending second groove in the inner surface of a part of the holder subject to a load of the ball stud in the axis direction from the ball part. Furthermore, the second groove is formed so that the second groove has a corner at least at the base of the cross-section. In this case, the shape of the second groove with a corner at least at the base of the cross-section includes a shape with two corners at both ends of the base extending in the plane shape for example, specifically a shape with the trapezoid or square side cross-sectional shape. Accordingly, the ball seat can contain more lubricant compared with the case in which the corner of the base of the second groove is rounded. Therefore, it is possible to improve capability of lubricant supply to a part in the holder subject to a load of the ball stud in the axis direction and to secure smooth slidability of the ball part.

Furthermore, the present invention can be used as an invention of a ball seat as well as an invention of a ball joint including the ball seat.

Specifically, it is preferable that a tip of a shaft-shaped stud has a ball stud with a spherical ball part, the ball seat, and a socket for housing a holder of the ball seat so that the holder is pushed to the ball part side by the inner surface to be deformed. With a ball joint with this structure, the same effect as the aforementioned ball seat can be expected.

### BRIEF DESCRIPTION OF THE DRAWINGS

Fig. 1 is a vertical cross-sectional view illustrating an outline of a structure of a ball joint including a ball seat according to one embodiment of the present invention.
Figs. 2(A) and (B) illustrate an outline of the ball seat illustrated in Fig. 1.
Fig. (A) is a plan view of the ball seat, and Fig. (B) is a vertical cross-sectional view of the ball seat along the line A-A of Fig. (A).
Fig. 3 is an enlarged sectional end view illustrating a cross-section of a first groove of the ball seat along the line B-B of Fig. 2.
Fig. 4 is an enlarged sectional end view illustrating a cross-section of a second groove of the ball seat along the line C-C of Fig. 2.
Figs. 5(A) and (B) illustrate a cross-section of the first groove according to the present invention when the first groove has a corner (a part with curvature of an infinite value). Fig. (A) is an enlarged sectional end view illustrating an example of the first groove with a corner (a part with curvature of an infinite value), and Fig. (B) is an enlarged sectional end view of another example of the first groove with a corner (a part with curvature of an infinite value).
Fig. 6 is an enlarged sectional end view illustrating a cross-section of a first groove of a ball seat according to a modification of the present invention.
Fig. 7 is an enlarged sectional end view illustrating a cross-section of a first groove of a ball seat according to another modification of the present invention.
Fig. 8 is an enlarged sectional end view illustrating a cross-section of a first groove of a ball seat according to another modification of the present invention.

### DESCRIPTION OF EMBODIMENTS

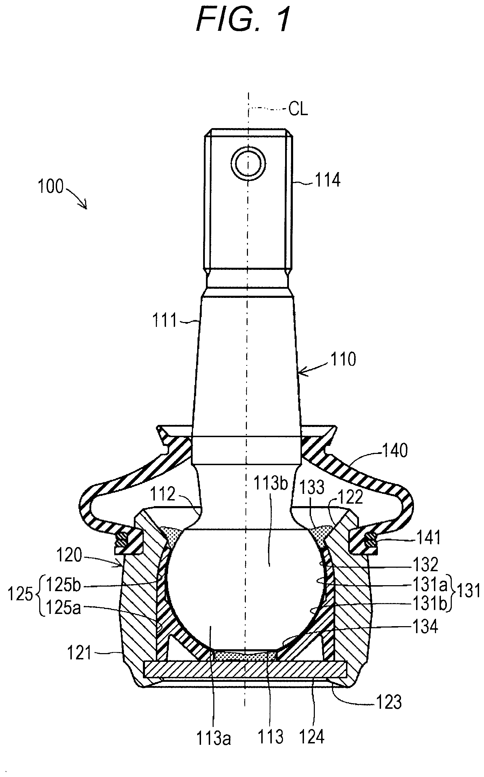

The present invention will be described below with reference to the drawings. Fig. 1 is a vertical cross-sectional view schematically illustrating a structure of a ball joint 100 including a ball seat 130 according to the present invention. Note that, in each drawing referenced in this specification, some components are schematically illustrated by exaggeration for example, to help understanding of the present invention. Therefore, the size and the ratio of each component may be different. The ball joint 100 is a joint member for connecting components while allowing angle changes between the components in a suspension mechanism (suspension device) or steering mechanism (steering device) used for a vehicle such as an automobile.

The ball joint 100 mainly includes a ball stud 110, a socket 120, the ball seat 130, and a dust cover 140. Among these components, the ball stud 110 is made of steel. The ball stud 110 includes a substantially spherical ball part 113 at one end of a shaft-shaped stud 111 via a constricted part 112.

The stud 111 is a part for connecting the ball joint 100 to each component in the steering mechanism or suspension mechanism not illustrated. The stud 111 has a male screw 114 at the end opposite to the ball part 113. On the other hand, the ball part 113 is a part that slides in the ball seat 130. The ball part 113 has a smooth spherical shape so that the ball part 113 smoothly slides against an inner periphery.

The socket 120 is formed by casting a metallic material such non-ferrous metal and steel. The socket 120 includes a tubular socket body 121 and a connector (not illustrated) extending in the horizontal direction from the socket body 121. In the present embodiment, the socket 120 is formed by forging steel. The socket 120 may also be formed by casting another material, for example, one of various alloy materials such as an aluminum material, a magnesium material, and a zinc material. The connector not illustrated is a part to connect the ball joint 100 to each component in the steering mechanism or suspension mechanism not illustrated.

The socket body 121 is a part for housing and holding the ball part 113 of the ball stud 110 via the ball seat 130. The socket body 121 has a cylindrical shape with base with one end (upper side in the drawing) opened and the other end (lower side in the drawing) closed by a plug 124. More specifically, the socket body 121 has a stud opening 122 for the stud 111 to pass through at one end (upper side in the drawing) and a plug retainer 123 for fixing the plug 124 by swaging at the other end (lower side in the drawing). The plug 124 is a plate member for closing an opening at the other end (lower side in the drawing) of the cylindrical socket body 121. The plug 124 is made by forming steel in a disk shape.

On the other hand, a housing 125 is formed inside the socket body 121. The housing 125 is a part for holding the ball part 113 via the ball seat 130 and is formed in a cylindrical shape. More specifically, the housing 125 has a straight part 125a and a tapered part 125b. The straight part 125a has a part for housing a hemispherical part 113a at a tip of the ball part 113 that has a constant inner diameter. The tapered part 125b has a part for covering a hemispherical part 113b at the stud 111 side of the ball part 113 toward inside, in other words, toward the ball part 113 side in a shape with narrowed inner diameter.

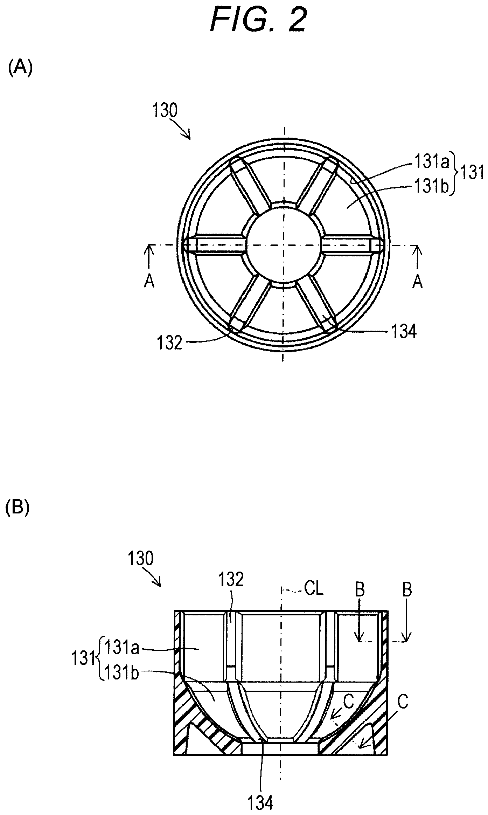

The ball seat 130 as a bearing seat is provided in the housing 125. As illustrated in Figs. 2(A) and (B), the ball seat 130 is a resin component for slidably holding the ball part 113 of the ball stud 110, and has a cylindrical shape. In this case, the ball seat 130 is made of a synthetic resin material such as polyether ether ketone resin (PEEK), polyimide resin (PI), polyacetal resin (POM), polyvinyl chloride resin (PVC), polyurethane resin (PUR), polycarbonate resin (PC), polystyrene resin (PS), nylon resin (PA-6T, 9T), and polypropylene (PP).

More specifically, the ball seat 130 includes a holder 131 including a stud-side holder 131a and a tip-side holder 131b. The stud-side holder 131a covers most parts of the hemispherical part 113a of the stud 111 side at the upper side of the ball part 113 in the drawing. The tip-side holder 131b covers most parts of the hemispherical part 113b at a tip at the lower side of the ball part 113 in the drawing.

The periphery of the stud-side holder 131a is formed in a circular outer shape corresponding to the inner diameter of the straight part 125a of the housing 125 of the socket body 121. Furthermore, the inner surface is formed in a cylindrical shape with the inner diameter larger than the hemispherical part 113b at the stud side of the ball part 113. The thickness between the inner surface and the outer surface of the stud-side holder 131a can be varied so that the ball seat 130 can incline inward along the inner surface of the socket body 121.

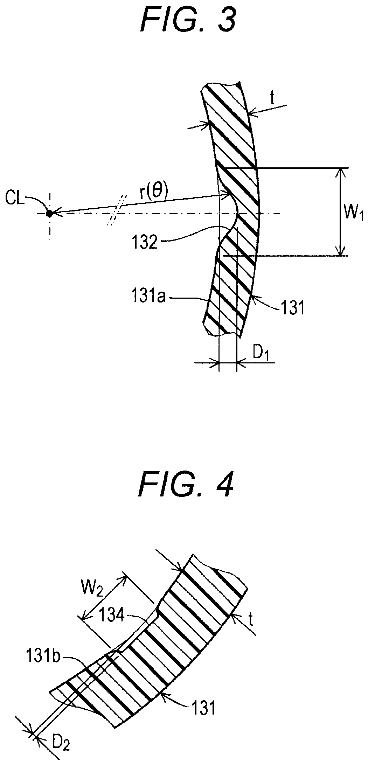

Furthermore, six first grooves 132 are formed from the stud-side opening of the holder (131) toward the tip-side holder 131b in the inner surface of the stud-side holder 131a. As illustrated in Fig. 3 in detail, each first groove 132 is a part for keeping grease 133 to supply the grease 133 as lubricant to a slide part between the inner surface of the ball seat 130 and the outer surface of the ball part 113. Each first groove 132 is formed to dent from the inner surface of the stud-side holder 131a.

More specifically, the first groove 132 has an only shape with the curvature of the inner surface of the cross-section at all arbitrary locations for the whole length being a finite value, in other words, has a shape in which a shape with the curvature of the inner surface being an infinite value is not included. In this case, the side cross-sectional shape of the first groove 132 includes a boundary where the first groove 132 opens on the inner periphery of the stud-side holder 131a. In each drawing, the grease 133 in each groove is omitted to clearly describe the shape of the first groove 132 and the shape of a second groove 134 described later.

Furthermore, the depth D₁ of the first groove 132 is 40% of the thickness t of the stud-side holder 131a. Moreover, the opening width W₁ that opens on the inner surface of the stud-side holder 131a is formed so that the opening width W₁ opens more largely than the thickness t of the stud-side holder 131a. In the present embodiment, these six first grooves 132 are equally arranged on the inner surface of the stud-side holder 131a along the circumferential direction.

On the other hand, the periphery of the tip-side holder 131b is formed to have a circular outer shape corresponding to the inner diameter of the straight part 125a of the housing 125 of the socket body 121. Furthermore, the inner periphery is formed in a hemispherical shape corresponding to the shape of the hemispherical part 113a at the tip of the ball part 113. Six second grooves 134 are radially formed on the inner periphery of the tip-side holder 131b from the tip-side holder (131b) toward the stud-side holder 131a side. As illustrated in Fig. 4 in detail, each second groove 134 is a part for keeping the grease 133 to supply the grease 133 to a slide part between the inner surface of the ball seat 130 and the outer surface of the ball part 113. Each second groove 134 is formed to dent from the inner surface of the tip-side holder 131b.

More specifically, in the second groove 134, the side cross-sectional shape of the inner surface of the cross-section at all arbitrary locations for the whole length is formed in a substantially square side cross-sectional shape where the side-cross sectional shape dents from the inner surface of the tip-side holder 131b to have a circular side cross-sectional shape and then bends substantially perpendicularly and has the base extending in a straight manner. Furthermore, the depth D₂ of the second groove 134 is not more than the depth D₁ of the first groove 132. Moreover, the opening width W₂ opened on the inner surface of the tip-side holder 131b has the same width as the opening width W₁ of the first groove 132. In the present embodiment, these six second grooves 134 are equally arranged on the inner surface of the tip-side holder 131b along the circumferential direction. That is, each second groove 134 and each first groove 132 are connected to each other.

In the cross-sectional view of Fig. 2(B), since the shape with the curvature of a finite value of the first groove 132 and the second groove 134 is not a corner, this shape does not directly appear on the drawing. Nevertheless, in order to help understanding, the boundary where the curvature changes is intentionally shown by a thin line.

The dust cover 140 is provided to an upper part of the socket body 121 of the socket 120 so that the upper part of the socket body 121 and the ball part 113 of the ball stud 110 housed in the socket body 121 are covered. The dust cover 140 is made of a rubber material or a soft synthetic resin material that can be elastically deformed. The dust cover 140 has a substantially cylindrical shape with a wide center part. The stud 111 of the ball stud 110 is inserted into one opening (upper side in the drawing) of the dust cover 140, and the dust cover 140 is fixed to the lower part of the stud 111 by elastic force. The other opening (lower side in the drawing) of the dust cover 140 is fitted into a recess formed on the outer periphery of the socket body 121 and fixed by a metal circlip 141. Accordingly, the dust cover 140 prevents penetration of foreign materials into the ball seat 130.

### (Manufacture of ball joint 100)

Manufacture of the ball joint 100 with this structure will be described. In the description of the process of manufacturing the ball joint 100, manufacturing processes that do not directly relate the present invention will be omitted.

First, an operator prepares the ball stud 110 and the ball seat 130 that are components of the ball joint 100. In this case, the ball stud 110 is formed by separately forging and cutting steel. The ball seat 130 is formed by separate injection molding. Next, the operator assembles the ball stud 110 and the ball seat 130. Specifically, the operator inserts the ball part 113 of the ball stud 110 from the stud-side holder 131a side of the holder 131 of the ball seat 130 and houses the ball part 113 in the holder 131.

Next, the operator prepares the socket 120 and the plug 124. In this case, the socket 120 is formed by separately forging steel. The plug 124 is formed by separately pressing steel. Next, the operator assembles the ball seat 130 housing the ball part 113 in the socket 120 by pressing equipment not illustrated. Specifically, the operator inserts the ball stud 110 into the straight part 125a of the housing 125 of the socket 120 from the stud 111 side while the plug 124 is fixed to the end face (lower end face in Fig. 1) at the tip-side holder 131b side of the ball seat 130. Accordingly, the operator inserts the ball seat 130 into the housing 125 from the stud-side holder 131a side. In this case, when the operator fixes the plug 124, the operator appropriately fills the grease 133 in the opening of the tip-side holder 131b of the ball seat 130.

The inner periphery of the tapered part 125b of the housing 125 is gradually narrowed. Therefore, in the process of inserting the ball seat 130 into the housing 125 of the socket 120, as the ball seat 130 is being inserted, the stud-side holder 131a of the ball seat 130 is pushed by the tapered part 125b, and deformed to be inclined to the ball part 113 side. In this case, the first groove 132 formed in the stud-side holder 131a of the ball seat 130 has only a shape with the curvature of the inner surface of the cross-section being a finite value, and has a shape where a shape with the curvature of the inner surface being an infinite value, for example, a corner with a right angle, an acute angle, or an obtuse angle (including other sharp shape), is not included. Therefore, press fitting is carried out while overload of stress and occurrence of a damage due to concentration of a load for deformation on specific parts such as corners are prevented.

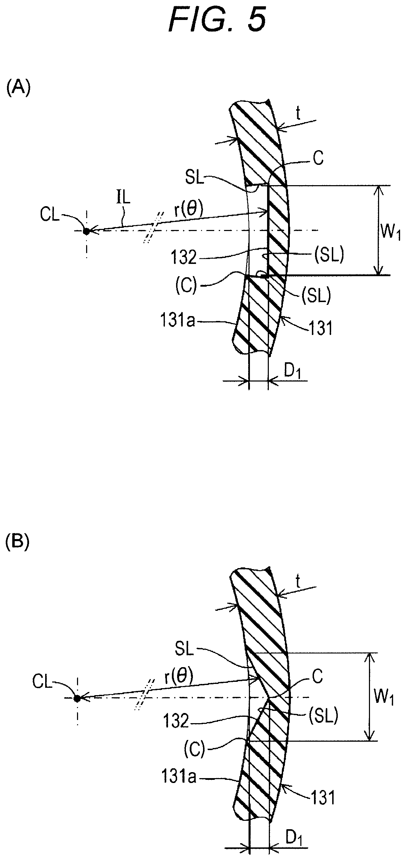

In this case, when the first groove 132 is formed to have a side cross-sectional shape with the curvature of the inner surface being an infinite value, if the side cross-sectional shape of the first groove 132 is formed to be a square side cross-sectional shape where two sides including two straight line parts SL are provided against the base including one straight line part SL and a corner C is formed at both ends of the base as illustrated in Fig. 5(A), or the side cross-sectional shape of the first groove 132 is formed to be a triangular side cross-sectional shape with the base with one sharp corner C where two straight line parts SL intersect with each other in the depth direction as illustrated in Fig. 5(B) for example, a load easily concentrates on these corners C and overload and a damage due to stress concentration easily occurs.

When the ball seat 130 is pressed in, the depth D₁ of the first groove 132 is 40% of the thickness of the stud-side holder 131a. Therefore, split of the stud-side holder 131a and generation of a break and a crack in deformation can be prevented. In addition, when the ball seat 130 is pressed in, the opening width W₁ is larger than the thickness of the stud-side holder 131a. Therefore, narrowing of the opening width W₁ due to deformation can be prevented.

Then, when the ball seat 130 is pressed in until a certain position in the housing 125 of the socket 120, the pressing equipment swages with bending the opening of the straight part 125a of the socket 120 inward to form the plug retainer 123, thereby fixing the plug 124. Accordingly, the ball seat 130 is securely held in the holder 131 of the socket 120 while the stud-side holder 131a is pressed to the ball part 113 and deformed.

Next, the operator prepares the dust cover 140 and the circlip 141 and attach them to the ball stud 110 and the socket 120, respectively. Specifically, the operator applies the grease 133 of proper amount on the ball part 113 exposed from the stud opening 122 of the socket 120. Next, the operator fits one end of the dust cover 140 (upper side in the drawing) to the periphery of the stud 111 of the ball stud 110, and fits the other end of the dust cover 140 (lower side in the drawing) on a recess formed at the upper side in the drawing on the outer periphery of the socket body 121. Then, the operator fits the circlip 141 to the dust cover 140 fitted to the outer periphery of the socket body 121 to fix the dust cover 140 to the socket body 121. Accordingly, the ball joint 100 is completed.

### (Actuation of ball joint 100)

Next, actuation of the ball joint 100 with this structure will be described. In the present embodiment, the ball joint 100 assembled to a suspension mechanism (suspension device) of a vehicle such as an automobile will be described. Here, a suspension mechanism (suspension device) refers to a device in a vehicle for reducing vibration from a road surface and securely grounding wheels on the road surface to maintain driving stability and control stability of the vehicle. The ball joint 100 supports a load from the vehicle while rotating or swinging the ball stud 110 in a certain direction in the suspension mechanism.

In the ball joint 100 included in a vehicle (not illustrated), the ball stud 110 swings in a certain direction in accordance with up-and-down motion of the running vehicle. Accordingly, the ball part 113 housed in the holder 131 of the ball seat 130 rotates and slides in a certain direction corresponding to the swinging direction of the ball stud 110 in the holder 131 of the ball seat 130. In this case, the ball seat 130 smoothly and slidably holds the ball part 113 by the grease 133 supplied from the first grooves 132 and the second grooves 134.

In addition, the surface in the first groove 132 has only a shape with the curvature being a finite value. Therefore, the ball seat 130 can prevent occurrence of a damage from the first grooves 132 even if a compression load or tension load is applied between the ball part 113 and the housing 125 of the socket 120. In addition, in the ball seat 130, the second groove 134 that has a corner on the base and contains more grease 133 is formed at a part subject to a load of the ball stud 110 in the axis direction from the ball part 113. Therefore, sufficient amount of the grease 133 is supplied between the ball part 113 and the holder 131, and smooth slidability is secured.

As understood from the description of the method of actuation above, according to the invention, in the ball seat 130, the side cross-sectional shape of the first groove 132 formed in the holder 131 slidably holding the ball part 113 of the ball stud 110 is formed in a shape with the curvature of the inner surface being a finite value. Accordingly, in the ball seat 130, the side cross-sectional shape of the first groove 132 does not include a part with infinite curvature, for example, a corner with a right angle, an acute angle, or an obtuse angle, or other sharp parts. Therefore, it is possible to prevent concentration of a load at a certain location such as a corner or sharp parts when the holder 131 is deformed in the socket 120, and it is possible to prevent overload and a damage due to stress concentration. As a result, the ball seat 130 can simplify the process of assembling the ball joint 100 and realizes efficient assembly with improved yield.

Furthermore, in implementation of the present invention, various modifications are possible without limited to the above embodiment as long as the purpose of the present invention is maintained. In the drawings referred to in order to describe the following modifications, the same reference signs are given to the same components as the above embodiment or the components corresponding to the above embodiment, and description of such components will be omitted.

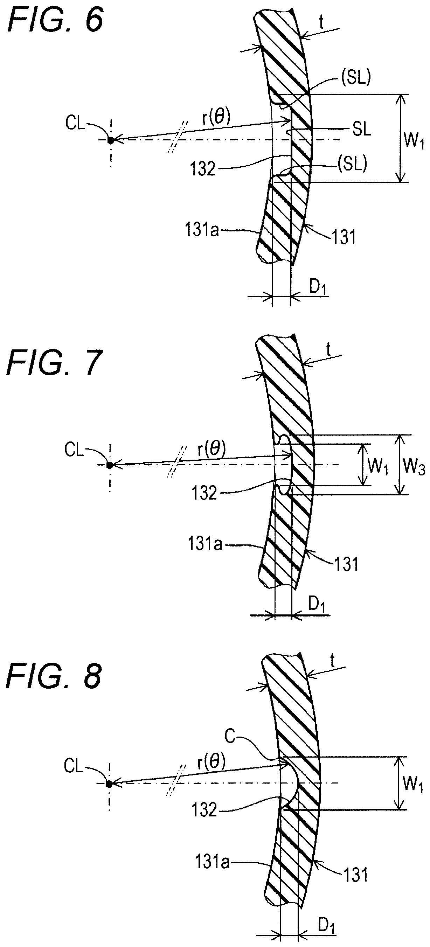

In the invention, the side cross-sectional shape of the first groove 132 has only a shape with the curvature of the inner surface being a finite value. In this case, as illustrated in Fig. 6 for example, the first groove 132 may include the straight line part SL in the surface shape in the cross-section. Or, as illustrated in Fig. 7, the side cross-sectional shape may have a so-called undercut shape where the groove width W₃ inside the first groove 132 is wider than the opening width W₁ on the inner surface of the holder of the first groove 132. In addition, as illustrated in Fig. 8, the first groove 132 may be formed so that the side cross-sectional shape does not include a boundary where the first groove 132 opens on the inner periphery of the stud-side holder 131a.

In addition, the first groove 132 may be formed in a shape so that the first derivation value of the distance r (θ) between the central axis CL of the holder 131 and the inner surface of the first groove 132 consecutively changes. In this case, the first groove 132 will be a first groove with a shape where a shape in which the first derivation value of the distance r (θ) between the central axis CL of the holder 131 and the inner surface of the first groove 132 becomes discontinuous is excluded from the first groove 132 with the side cross-sectional shape being a finite value in the above embodiment. The shape in which the first derivation value becomes discontinuous is a shape in which two straight line parts SL making two sides in the first groove 132 are formed perpendicularly to the inner surface of the holder 131 in the depth direction, as illustrated in Fig. 5(A), for example. In other words, this shape is a shape in which two straight line parts SL are formed (that is, formed in parallel) on a virtual straight line IL extending from the central axis CL of the holder 131. Furthermore, the shape with the discontinuous first derivation value is a shape including an undercut shape illustrated in Fig. 7, for example.

As described, the side cross-sectional shape of the first groove 132 is formed in a shape in which the first derivation value of the distance r (θ) between the central axis CL of the holder 131 and the inner surface of the first groove 132 consecutively changes. Accordingly, as with the above embodiment, occurrence of overload and a damage due to stress concentration can be prevented at least in the first groove 132 extending along the central axis CL of the holder 131, in other words, the first groove 132 in which the central axis CL exists in the cross-sectional plane surface of the first groove 132 as dots.

In this case, the shape of the first groove 132 extending along the central axis CL of the holder 131 includes a shape extending in parallel with the central axis CL as well as a shape extending in a spiral shape. In addition, the central axis CL of the holder 131 is also the central axis of the tubular socket 120 and the ball seat 130 as well as the central axis of the shaft-shaped ball stud 110. The two straight line parts SL making the two sides of the first groove 132 illustrated in Fig. 6 are formed on the inner surface of the holder 131 not perpendicularly to the depth direction but in parallel with the straight line passing the central axis CL and perpendicular to the straight line parts SL making the base. The two straight line parts SL have a shape in which the first derivation value of the distance r (θ) consecutively changes.

In the above embodiment, the first groove 132 is formed in the stud-side holder 131a in the holder 131 of the ball seat 130. However, it is sufficient as long as the first groove 132 is formed at least in a part that deforms in the ball part 113 side in the holder 131. Therefore, for example, the first groove 132 can be formed on the tip-side holder 131b in addition to or instead of the stud-side holder 131a.

In the above embodiment, six first grooves 132 and six second grooves 134 are formed along the axis (central axis CL) direction of the holder 131 on the stud-side holder 131a and the tip-side holder 131b of the holder 131 of the ball seat 130. However, the direction of forming the first grooves 132 and the second grooves 134 is not limited to the above embodiment. Therefore, the first grooves 132 and the second grooves 134 can be formed on the inner periphery of the holder 131 in the circumferential direction of the holder 131 in addition to or instead of the axis direction of the holder 131, or can be formed in a spiral shape instead. In addition, the number of the first grooves 132 and the second grooves 134 may be not less than one and not more than five, or not less than seven. Moreover, the number of the first grooves 132 and the number of the second grooves 134 may be different. That is, the ball seat 130 may only include the first groove 132 on the stud-side holder 131a and/or the tip-side holder 131b.

In the above embodiment, the depth D₂ of the second groove 134 is shallower than the depth D₁ of the first groove 132. Accordingly, the ball seat 130 can prevent a damage on the tip-side holder 131b even if the second groove 134 includes a corner. However, the depth D₂ of the second groove 134 may be deeper than the depth D₁ of the first groove 132. That is, if the holder 131 is formed in the sufficient thickness against a load, the depth D₂ of the second groove 134 can be deeper than the depth D₁ of the first groove 132.

In the above embodiment, the holder 131 of the ball seat 130 is formed so that the stud-side holder 131a is deformed to the ball part 113 side by the tapered part 125b of the socket 120. However, the holder 131 of the ball seat 130 is not necessarily limited to the above embodiment in so far as the holder 131 is pushed to the ball part 113 side by the housing 125 and housed in the deformed socket 120. Therefore, the following structure is also possible, for example. First, the stud opening 122 side of the housing 125 of the socket 120 is formed in a straight cylindrical shape with the constant inner diameter. The ball seat 130 is arranged in the housing 125. Thereafter, the stud opening 122 is swaged. Accordingly, the stud-side holder 131a of the holder 131 of the ball seat 130 is inclined and deformed to the ball part 113 side. The stud-side holder 131a of the holder 131 may be elastically deformed or plastically deformation including the above embodiment.

In the above embodiment, the ball joint 100 is used for a suspension mechanism. Of course, however, the ball joint 100 according to the present invention is not limited thereto. The ball joint 100 may be widely used for a steering mechanism and the like in addition to a suspension mechanism included in a vehicle such as an automobile.

### DESCRIPTION OF REFERENCE SIGNS

- D₁: Depth of first groove
- D₂: Depth of second groove
- W₁: Opening width of first groove
- W₂: Opening width of second groove
- W₃: Maximum width of first groove
- t: Thickness of stud-side holder
- SL: Straight line part
- C: Corner
- CL: Central axis of holder
- IL: Virtual straight line
- r (θ): Distance between central axis of holder and surface of first groove
- 100: Ball joint
- 110: Ball stud
- 111: Stud
- 112: Constricted part
- 113: Ball part
- 113a: Tip-side hemispherical part
- 113b: Stud-side hemispherical part
- 114: Male screw
- 120: Socket
- 121: Socket body
- 122: Stud opening
- 123: Plug retainer
- 124: Plug
- 125: Housing
- 125a: Straight part
- 125b: Tapered part
- 130: Ball seat
- 131: Holder
- 131a: Stud-side holder
- 131b: Tip-side holder
- 132: First groove
- 133: Grease
- 134: Second groove
- 140: Dust cover
- 141: Circlip

## Claims

1. A ball seat (130) comprising
a tubular holder (131) housed in a socket (120) while the tubular holder (131) is pushed to a ball part (113b) side by an inner surface of the socket (120) to be deformed, the tubular holder (131) slidably housing the ball part (113b) formed at a tip of a ball stud (110) extending in a stick shape, wherein the holder (131) has a concavely extending first groove (132) at least in an inner surface of the deformed part,
the first groove (132) is formed in a shape so that a curvature of an inner surface of a cross-section of the first groove (132) is a finite value for the whole length,
the holder (131) has a concavely extending second groove (134) in an inner surface of a part subject to a load of the ball stud (110) in an axis direction from the ball part, the second groove (134) being formed to be connected to the first groove (132), and the second groove (134) is formed so that the second groove (134) has a corner at least at the base of a cross-section.

2. The ball seat (130) according to claim 1 , wherein
the first groove (132) is formed in a depth from not less than 40% to not more than 50% of a thickness of the holder (131).

3. The ball seat (130) according to any one of claims 1 to 2, wherein an opening width of the first groove (132) of the inner surface of the holder (131) is larger than the thickness of the holder (131).

4. The ball seat (130) according to any of claims 1 to 3, **characterized in that** the first groove (132) is formed from the stud-side opening of the holder (131) toward tip-side holder (131b) and the second groove (134) is formed on the inner periphery of the tip-side holder (131b) from the opening of the holder (131) opposite to the stud-side opening of the holder (131) towards a stud-side holder (131a).

5. The ball seat (130) according to any one of claims 1 to 4, **characterized in that** the first groove (132) has a first depth (D1) and the second groove (134) has a second depth (D2) and the second depth (D2) is deeper than the first depth (D1).

6. A ball joint (100) comprising:
a ball stud (110) with a spherical ball part at a tip of a shaft-shaped stud (111); the ball seat (130) according to any one of claims 1 to 5; and a socket for housing a holder (131) of the ball seat (130) so that the holder (131) is pushed to the ball part side by an inner surface to be deformed.

## Patentansprüche

1. Kugelsitz (130), umfassend
eine röhrenförmige Halterung (131), untergebracht in einem Sockel (120), während die röhrenförmige Halterung (131) zu einer Kugelteil (113b)-Seite durch eine Innenoberfläche des Sockels (120) gedrückt wird, um deformiert zu werden, ist das Kugelteil (113b), gebildet an einer Spitze eines Kugelbolzens (110), der sich in einer Stabform erstreckt, gleitfähig in der röhrenförmigen Halterung (131) untergebracht, wobei die Halterung (131) eine sich konkav erstreckende erste Rille (132) mindestens in einer Innenoberfläche des deformierten Teils aufweist,
wobei die erste Rille (132) in einer Form gebildet ist, so dass eine Krümmung einer Innenoberfläche eines Querschnitts der ersten Rille (132) ein endlicher Wert für die Gesamtlänge ist,
wobei die Halterung (131) eine sich konkav erstreckende zweite Rille (134) in einer Innenoberfläche eines Teils aufweist, der einer Last des Kugelbolzens (110) in einer Achsenrichtung von dem Kugelteil ausgesetzt ist,
wobei die zweite Rille (134) so gebildet ist, dass sie mit der ersten Rille (132) verbunden ist, und
wobei die zweite Rille (134) so gebildet ist, dass die zweite Rille (134) eine Ecke mindestens an der Basis eines Querschnitts aufweist.

2. Kugelsitz (130) gemäß Anspruch 1, wobei
die erste Rille (132) in einer Tiefe von nicht weniger als 40 % bis zu nicht mehr als 50 % einer Dicke der Halterung (131) gebildet ist.

3. Kugelsitz (130) gemäß einem der Ansprüche 1 bis 2, wobei eine Öffnungsweite der ersten Rille (132) der Innenoberfläche der Halterung (131) größer ist als die Dicke der Halterung (131).

4. Kugelsitz (130) gemäß einem der Ansprüche 1 bis 3, **dadurch gekennzeichnet, dass** die erste Rille (132) von der Bolzenseite-Öffnung der Halterung (131) zur Spitzenseite-Halterung (131b) gebildet ist und die zweite Rille (134) auf der inneren Begrenzungsfläche der Spitzenseite-Halterung (131b) von der Öffnung der Halterung (131) gegenüber der Bolzenseite-Öffnung der Halterung (131) zu einer Bolzenseite - Halterung (131a) gebildet ist.

5. Kugelsitz (130) gemäß einem der Ansprüche 1 bis 4, **dadurch gekennzeichnet, dass** die erste Rille (132) eine erste Tiefe (D1) aufweist und die zweite Rille (134) eine zweite Tiefe (D2) aufweist und die zweite Tiefe (D2) tiefer ist als die erste Tiefe (D1).

6. Kugelgelenk (100), umfassend:
einen Kugelbolzen (110) mit einem kugelförmigen Kugelteil an einer Spitze eines stielförmigen Bolzens (111); den Kugelsitz (130) gemäß einem der Ansprüche 1 bis 5;
und einen Sockel zum Unterbringen einer Halterung (131) des Kugelsitzes (130), so dass die Halterung (131) zu der Kugelteilseite durch eine Innenoberfläche gedrückt wird, um deformiert zu werden.

## Revendications

1. Cage (130) de rotule comprenant un support tubulaire (131) logé dans une cuvette (120) tandis que le support tubulaire (131) est poussé vers un côté de partie (113b) de rotule par une surface intérieure de la cuvette (120) à déformer, le support tubulaire (131) accueillant à coulissement la partie (113b) de rotule formée au niveau du bout d'un pivot (110) à rotule s'étendant en forme de bâton,
dans lequel :
le support (131) comporte une première rainure (132) s'étendant de façon concave au moins dans une surface intérieure de la partie déformée,
la première rainure (132) est façonnée dans une forme telle qu'une courbure d'une surface intérieure d'une section transversale de la première rainure (132) est une valeur finie sur toute la longueur,
le support (131) comporte une seconde rainure (134) s'étendant de façon concave dans une surface intérieure d'une partie soumise à une charge du pivot (110) à rotule dans une direction axiale depuis la partie de rotule, la seconde rainure (134) étant façonnée pour être raccordée à la première rainure (132), et
la seconde rainure (134) est façonnée de façon à ce que la seconde rainure (134) comporte un coin au moins à la base d'une section transversale.

2. Cage (130) de rotule selon la revendication 1, dans laquelle la première rainure (132) est façonnée avec une profondeur allant d'au moins 40% à au plus 50% de l'épaisseur du support (131).

3. Cage (130) de rotule selon l'une quelconque des revendications 1 et 2, dans laquelle la largeur d'ouverture de la première rainure (132) de la surface intérieure du support (131) est supérieure à l'épaisseur du support (131).

4. Cage (130) de rotule selon l'une quelconque des revendications 1 à 3, **caractérisée en ce que** la première rainure (132) est façonnée depuis l'ouverture côté pivot du support (131) vers le support (131b) côté bout et la seconde rainure (134) est façonnée sur la périphérie intérieure du support (131b) côté bout depuis l'ouverture du support (131) en face de l'ouverture côté pivot du support (131) vers un support (131a) côté bout.

5. Cage (130) de rotule selon l'une quelconque des revendications 1 à 4, **caractérisée en ce que** la première rainure (132) présente une première profondeur (D1), la seconde rainure (134) présente une seconde profondeur (D2) et la seconde profondeur (D2) est supérieure à la première profondeur (D1).

6. Joint à rotule (100) comprenant :
un pivot (110) à rotule ayant une partie sphérique de rotule au niveau du bout d'un pivot (111) en forme de tige ;
la cage (130) de rotule selon l'une quelconque des revendications 1 à 5 ; et
une cuvette pour loger un support (131) de la cage (130) de rotule de façon à ce que le support (131) soit poussé vers le côté de partie de rotule par une surface intérieure à déformer.
